# EUROPÄISCHE PATENTSCHRIFT

(11) **EP 2 994 381 B1**
(45) Veröffentlichungstag und Bekanntmachung des Hinweises auf die Patenterteilung: **22.03.2017**
(21) Anmeldenummer: 14739755.8
(22) Anmeldetag: 09.07.2014
(51) Int. Cl.: B63H 23/24, B63H 5/125, H02K 9/08

(54) **ELEKTRISCHER GONDELANTRIEB FÜR EIN SCHIFF**
ELECTRIC POD DRIVE FOR A SHIP
SYSTÈME DE PROPULSION ÉLECTRIQUE MONTÉ DANS UNE NACELLE ET DESTINÉ À UN NAVIRE

(30) Priorität: 18.07.2013 DE 102013214082
(43) Veröffentlichungstag der Anmeldung: 16.03.2016
(73) Patentinhaber: Siemens Aktiengesellschaft, 80333 München (DE)
(72) Erfinder: BALZER, Christoph, 12163 Berlin (DE); SEIBICKE, Frank, 14822 Borkheide (DE)
(86) Internationale Anmeldenummer: PCT/EP2014/064685
(87) Internationale Veröffentlichungsnummer: WO 2015/007587

(56) Entgegenhaltungen:
- DE-A1- 10 000 578
- DE-A1- 19 648 455
- DE-A1- 19 801 448
- DE-C- 595 012
- US-A- 2 991 377

## Beschreibung

Die Erfindung betrifft einen elektrischen Gondelantrieb für ein Schiff aufweisend einen Elektromotor mit einem Stator und einer koaxial zum Stator angeordneten Welle, ein Gehäuse mit zumindest einem Gehäuseteil, welches sich in axialer Richtung zumindest teilweise entlang des Stators erstreckt und welches in Umfangsrichtung den Stator zumindest teilweise umfasst, zumindest einen Wickelkopf, der jeweils an einer axialen Stirnseite aus dem Stator herausragt, und eine Strömungsmaschine, welche zwischen der Welle und dem Gehäuse angeordnet ist und welche drehfest mit der Welle verbunden ist, wobei der zumindest eine Wickelkopf durch ein erstes, mittels der zumindest einen Strömungsmaschine umwälzbares Kühlmedium kühlbar ist.

Ein derartiger elektrischer Gondelantrieb kommt beispielsweise als Antriebseinheit bei einem Schiff zum Einsatz, wobei sich der Gondelantrieb außerhalb des Schiffsrumpfes und unterhalb des Wasserspiegels, insbesondere im Meerwasser, befindet und einen Propeller antreibt. Derartige Gondelantriebe sind auch unter der Bezeichnung POD-Antriebe bekannt. Dabei muss bei einem solchen elektrischen Gondelantrieb die Verlustwärme der elektrischen Maschine in geeigneter Form abgeführt werden, um die Maschine während des Betriebs auf einem konstanten und akzeptablen Temperaturniveau zu halten.

Die Wärmeabfuhr des Stators geschieht bisher über die Oberfläche des Gehäuses durch Konvektion. Das Statorblechpaket ist in ein Gehäuse eingeschrumpft, wodurch ein guter Wärmeübergang gewährleistet wird. Allerdings können die Wickelköpfe dadurch nicht ausreichend gekühlt werden, da sie das Gehäuse nicht berühren und somit die Wärme nicht direkt an das Gehäuse und somit an das Wasser übertragen werden kann.

Aus der DE 877 254 C ist ein Gondelantrieb bekannt, der einen Elektromotor in einem Motorgehäuse aufweist, wobei das Motorgehäuse von dem Gondelgehäuse umschlossen wird und zwischen dem Motorgehäuse und dem Gondelgehäuse ein Ringkanal vorgesehen ist. Dabei kann der Ringkanal von in die Gondel eindringendem Wasser durchströmt werden.

Aus der DE 198 26 229 A1 ist ein weiterer Gondelantrieb bekannt, welcher an einem Schaft am Schiffsrumpf befestigt ist. Dabei sind Kühlungselemente am Schaftunterteil vorgesehen. Weiterhin ist die Welle des Gondelantriebs als Hohlwelle ausgeführt, die von Meerwasser durchströmt werden kann.

Aus der DE 198 01 448 A1 ist eine elektrische Antriebseinrichtung für Schiffe bekannt, bestehend aus einem an der Unterseite des Schiffsrumpfes gondelartig angeordneten Gehäuse zur Aufnahme eines Elektromotors mit Läufer und Stator, wobei an der den Läufer tragenden Welle wenigstens ein Propeller angeordnet ist.

Aus der US 2 991 377 A ist ein vollständig geschlossener, flammensicherer oder explosionssicherer Motor mit einer Kühlung bekannt.

Aus der DE 595 012 C ist eine Einrichtung zur Verhinderung der unzulässigen Erwärmung von gekapselten Getrieben bekannt, die mit einem geschlossenen, durch einen Innenluftstrom gekühlten Elektromotor zusammengebaut sind.

Der Erfindung liegt die Aufgabe zugrunde, einen elektrischen Gondelantrieb mit einer verbesserten Kühlung bereitzustellen.

Diese Aufgabe wird durch einen elektrischen Gondelantrieb der eingangs genannten Art dadurch gelöst, dass der elektrische Gondelantrieb zumindest eine erste Einlassöffnung und zumindest eine erste Auslassöffnung aufweist, wobei zwischen der jeweiligen ersten Einlassöffnung und der jeweiligen ersten Auslassöffnung zumindest ein erster, im Wesentlichen senkrecht zur axialen Richtung verlaufender Kühlkanal vorgesehen ist, wobei bei einer Relativbewegung des Gondelantriebs in Bezug auf den Gondelantrieb zumindest teilweise umgebendes Wasser das Wasser durch die jeweilige erste Einlassöffnung, den zumindest einen ersten Kühlkanal und die jeweilige erste Auslassöffnung hindurch strömen kann, wobei das durch den zumindest einen ersten Kühlkanal strömende Wasser durch zumindest ein erstes Trennelement vom ersten Kühlmedium getrennt ist.

Bei elektrischen Maschinen ist die Kühlung besonders der Wickelköpfe oftmals problematisch, da sich die Wickelköpfe im Betrieb stark erhitzen und die Wickelköpfe daher bei mangelhafter Abfuhr der Abwärme Stellen mit Hitzestau, so genannte "hot spots", bilden. Erfindungsgemäß ist daher zumindest eine Strömungsmaschine vorgesehen, die drehfest mit der Welle verbunden ist und in radialer Richtung zwischen der Welle und dem Gehäuse, insbesondere dem zumindest einen Gehäuseteil, angeordnet ist. Dabei ist auch denkbar, dass die zumindest eine Strömungsmaschine drehfest mit dem Rotor verbunden ist, welcher wiederum drehfest mit der Welle verbunden ist. Vorzugsweise ist die jeweilige Strömungsmaschine im axialen Bereich des jeweiligen Wickelkopfs angeordnet.

Die zumindest eine Strömungsmaschine ermöglicht das Umwälzen des ersten Kühlmediums, wodurch der zumindest eine Wickelkopf kühlbar ist. Dabei wird ein Kühlkreislauf derart gebildet, dass die Abwärme des zumindest einen Wickelkopfs vom ersten Kühlmedium aufgenommen wird und an eine kühlere Stelle abgegeben wird, um nach vollständigem Durchlaufen des Kühlkreislaufs weitere Abwärme des zumindest einen Wickelkopfs aufzunehmen. Vorzugsweise ist dieser Kühlkreislauf im jeweiligen Wickelkopfbereich angeordnet, wobei die kühlere Stelle insbesondere die Innenseite des Gehäuses bzw. des zumindest einen Gehäuseteils ist. Somit kann die Abwärme des Wickelkopfs mittels des ersten Kühlmediums an das Gehäuse abgegeben werden, welches die Abwärme schließlich an das den elektrischen Gondelantrieb umgebende Wasser abgibt. Da der jeweilige Wickelkopf im Betrieb wesentlich wärmer als das Wasser ist, wird somit ein leistungsfähiger Kühlkreislauf realisiert.

Durch die drehfeste Verbindung der zumindest einen Strömungsmaschine mit der Welle wird sichergestellt, dass die Kühlung besonders leistungsstark ist, wenn die Welle mit einer vergleichsweise großen Drehzahl betrieben wird und somit der elektrische Gondelantrieb eine vergleichsweise große elektrische Leistung umsetzt. Gleichzeitig wird durch die drehfeste Verbindung sicher verhindert, dass der elektrische Gondelantrieb betrieben wird und Abwärme erzeugt, aber die Kühlung nicht zur Verfügung steht. Diese ungewünschte Konstellation kann beispielsweise bei einem Gondelantrieb mit einem separat versorgten Fremdlüfter auftreten, wenn der Gondelantrieb mit Antriebsleistung versorgt wird, aber der Fremdlüfter aufgrund eines technischen Defekts nicht mit elektrischer Leistung versorgt werden kann.

Die erfindungsgemäße Anordnung ermöglicht weiterhin, den elektrischen Gondelantrieb gegenüber dem den Gondelantrieb tragenden Schaft gekapselt auszuführen. Dies wirkt sich positiv auf die Lebensdauer des elektrischen Gondelantriebs aus, weil der oben erläuterte Kühlkreislauf innerhalb des elektrischen Gondelantriebs geschlossen ausgeführt werden kann und somit verhindert werden kann, dass stark korrosiv wirkendes Meerwasser in direkten Kontakt mit dem Stator und weiteren Bauteilen des Elektromotors gelangt.

Dank des zumindest einen ersten Kühlkanals kann ein besonders effizienter Abtransport der Abwärme des elektrischen Gondelantriebs erreicht werden, da die Abwärme unmittelbar an das Wasser abgegeben wird, welches den elektrischen Gondelantrieb zumindest teilweise umgibt. Von Vorteil sind dabei insbesondere die hohe Wärmekapazität des Wassers sowie die üblicherweise im Vergleich mit der Temperatur des Stators geringe Wassertemperatur. Eine besonders gute Kühlung kann dadurch erreicht werden, dass eine Mehrzahl von derartigen Kühlkanälen vorgesehen wird.

Da der elektrische Gondelantrieb üblicherweise im salzhaltigen Meerwasser betrieben wird, ist der zumindest eine derart ausgeformte Kühlkanal vorzugsweise zumindest teilweise aus einem besonders korrosionsbeständigen und gleichzeitig gut wärmeleitenden Material, beispielsweise einer Kupfer-Aluminium-Legierung bzw. Bronze.

Dabei das Material zumindest in einer meerwasserhaltiger Atmosphäre korrosionsbeständig sein, wobei diese Materialeigenschaft insbesondere während des ordnungsgemäßen Gebrauchs des elektrischen Gondelantriebs, insbesondere wenn der Gondelantrieb in Wasser bzw. Meerwasser eingetaucht ist, erreicht werden soll. Somit wird eine Dauerfestigkeit erreicht, welche einen jahrelangen Betrieb des Gondelantriebs im Meerwasser ermöglicht.

Insbesondere kann das Material derart gewählt werden, dass eine ausreichende Korrosionsbeständigkeit beispielsweise gemäß den Korrosivitätskategorien C4 oder C5-I für atmosphärische Umgebungsbedingungen bzw. Im2 oder Im3 für Wasser gemäß der DIN EN ISO 12944-2 gewährleistet ist. So ist beispielsweise denkbar, dass das Material in direktem Kontakt mit Meerwasser ist. Alternativ kann das Material in direktem Kontakt mit Kühlluft oder einem anderen Kühlmedium sein, welches durch den Betrieb des elektrischen Gondelantriebs in Meerwasser salzhaltig ist und somit die oben genannte meerwasserhaltige Atmosphäre darstellt. Somit kann das zumindest eine Kühlmedium beispielsweise flüssig oder gasförmig ausgeführt sein, insbesondere sind hierfür geschlossene Kühlkreisläufe mit zirkulierendem Kühlwasser bzw. zirkulieren der Kühlluft denkbar.

Beispielsweise kann eine ausreichende Korrosionsbeständigkeit interpretiert werden als eine Schutzdauer zwischen 5 und 15 Jahren bzw. als eine Schutzdauer von über 15 Jahren, wie in der DIN EN ISO 12944-5 erläutert.

Alternativ oder zusätzlich kann die Korrosionsbeständigkeit des Materials derart gewählt werden, dass die Abtragungsrate des Materials während des ordnungsgemäßen Gebrauchs des elektrischen Gondelantriebs weniger als 100 µm, insbesondere weniger als 50 µm, pro Jahr beträgt. Dabei kann die Dicke der Schicht derart bemessen sein, dass nach einer gewünschten Mindestlebensdauer bzw. Schutzdauer und bei einer gegebenen Abtragungsrate eine Mindestschichtdicke erhalten bleibt. Insbesondere kann vorgesehen sein, dass die Schicht die Kühlkanäle in radialer Richtung begrenzt.

Als gut wärmeleitende Materialien werden hierbei jene mit einer Wärmeleitfähigkeit von zumindest 1 W/(m*K), insbesondere von zumindest 60 W/(m*K), angesehen. Geordnet nach zunehmender Wärmeleitfähigkeit sind Materialien mit einer Wärmeleitfähigkeit von zumindest als 60 W/(m*K) zum Beispiel die Legierung Bronze, insbesondere die Bronzelegierung CC333G bzw. CuAl10Fe5Ni5-C, sowie die Metalle Zinn, Chrom, Zink oder Aluminium, wobei auch Graphit eingesetzt werden könnte. Denkbar ist auch eine Legierung zu verwenden, die eine derartige Wärmeleitfähigkeit erreicht. Insbesondere kann ein Material gewählt werden, welches eine Wärmeleitfähigkeit von zumindest 80 W/(m*K)aufweist.

Dabei kann der zumindest eine erste Kühlkanal mit einer Spezialbeschichtung versehen werden, welche einen Bewuchs mit Muscheln, Seepocken oder anderen Organismen verhindert, welche die Strömung durch den Kühlkanal blockieren könnten. Eine derartige Spezialbeschichtung kann beispielsweise ein Lack sein, an welchem die Organismen keinen Halt finden, insbesondere Werkstoffe mit einem Abperl-Effekt bzw. Lotusblüten-Effekt.

Die Spezialbeschichtung kann aber auch derart ausgestaltet sein, dass sie regelmäßig mit einem elektrischem Strom beaufschlagt werden kann, wodurch ebenfalls ein störender Bewuchs verhindert werden kann. Hierzu kann beispielsweise eine streifenförmige Lackierung aufgebracht werden, wobei sich zwei unterschiedliche Arten von Streifen mit unterschiedlicher elektrischer Polarität beaufschlagen lassen und wobei ein jeweiliger Streifen der ersten Art immer an zumindest einen Streifen der zweiten Art angrenzt. Durch die Beaufschlagung mit Spannung bzw. Strömen unterschiedlicher Polarität lässt sich somit der pH im Wasser an der ersten Art und der zweiten Art der Streifen variieren, worauf sich die Organismen nicht einstellen können, so dass ein Bewuchs durch Organismen verhindert wird. Durch das derart erzeugte elektrische Feld wird bei der einen Beaufschlagung beispielsweise bei dem ersten Streifen ein alkalisches Umfeld und bei dem zweiten Streifen ein saures Umfeld geschaffen, wobei bei umgekehrter Polarität ein entsprechend umgekehrtes Umfeld erzeugt wird.

Durch den zumindest einen ersten Kühlkanal kann die Kühlleistung des elektrischen Gondelantriebs wesentlich erhöht werden, da eine große Menge Abwärme an das durch den zumindest einen ersten Kühlkanal strömende Wasser abgegeben werden kann. Insbesondere ist der zumindest eine erste Kühlkanal hierzu in unmittelbarer Nachbarschaft des jeweiligen Wickelkopfbereichs angeordnet, beispielsweise bei oder in einem Lagerschild, welches den jeweiligen Wickelkopfbereich in axialer Richtung begrenzt. Die Abgrenzung des zumindest einen ersten Kühlkanals zum jeweiligen Wickelkopfbereich, in welchem das erste Kühlmedium zirkulieren kann, wird durch das zumindest eine erste Trennelement gewährleistet. Um eine besonders gute Kühlung zu erreichen, weist das zumindest eine erste Trennelement eine gute Wärmeleitfähigkeit auf.

Der zumindest eine erste Kühlkanal kann beispielsweise in der Nachbarschaft eines Lagerschildes des elektrischen Gondelantriebs wie folgt angeordnet sein. Da vor dem Lagerschild der Propeller und die Bilge der Maschine lokalisiert sind, gibt es keine Verbindung zum Meerwasser, welches für eine verbesserte Wärmeabfuhr eingesetzt werden kann. Die Lösung beinhaltet ein Blech, welches über Abstandshalter direkt auf das Lagerschild befestigt wird. Dadurch entsteht eine Kammer zwischen diesen beiden Elementen. Die Kammern verfügen jeweils über eine erste Eintrittsöffnung und eine erste Austrittsöffnung zum Meerwasser. Damit wird ein permanenter Wasseraustausch durch die Kammer, welche den jeweiligen ersten Kühlkanal bildet, gewährleistet. Die jeweilige erste Eintrittsöffnung liegt vorzugsweise direkt im Strömungsbereich des Propellers, so dass das Meerwasser automatisch zur Kühlung in die Wasserkammern des Lagerschilds gespült wird. Dabei ist eine Pumpe zum Wassertransport nicht zwingend erforderlich, kann aber auch für einen verbesserten Wasseraustausch eingesetzt werden.

Bei einer vorteilhaften Ausgestaltung der Erfindung ist das erste Kühlmedium Luft. Entsprechend ist die zumindest eine Strömungsmaschine als Wellenlüfter ausgeführt, wodurch ein sehr kostengünstiger und dennoch zuverlässiger Kühlkreislauf im Wickelkopfbereich dargestellt werden kann.

Bei einer weiteren vorteilhaften Ausgestaltung der Erfindung ist zumindest ein erstes Kühlelement vorgesehen, welches in thermischem Kontakt mit dem zumindest einen Gehäuseteil steht und mittels welchem das erste Kühlmedium kühlbar ist.

Das zumindest eine erste Kühlelement kann beispielsweise als Kühlrippe oder Mehrzahl von Kühlrippen ausgeführt sein, welche in thermischem Kontakt mit dem zumindest einen Gehäuseteil steht. Insbesondere kann das zumindest eine erste Kühlelement stoffschlüssig mit dem Gehäuse bzw. dem zumindest einen Gehäuseteil ausgeführt sein, indem das Gehäuse bzw. das zumindest eine Gehäuseteil derartige Kühlrippen aufweist, welche die für die Kühlung zur Verfügung stehende Oberfläche vergrößern.

Denkbar ist weiterhin, dass im Kühlkreislauf des ersten Kühlmediums Leitelemente vorgesehen sind, welche in strömungstechnisch effizienter Weise die Kühlmediumströmung von der zumindest einen Strömungsmaschine zum jeweiligen Wickelkopf, vom jeweiligen Wickelkopf zum zumindest einen ersten Kühlelement und/oder vom zumindest einen ersten Kühlelement zur zumindest einen Strömungsmaschine leiten. Vorteilhafterweise ist das zumindest eine erste Kühlelement derart ausgeformt, dass zum Beispiel durch eine besonders große Oberfläche des zumindest einen ersten Kühlelementes eine effiziente Aufnahme von Abwärme aus dem ersten Kühlmedium erreicht wird und gleichzeitig eine Umlenkfunktion der Strömung des ersten Kühlmediums erfüllt wird. Die Kühlleistung kann dabei beispielsweise dadurch erreicht werden, dass das zumindest eine erste Kühlelement sich entlang der kompletten axialen Länge des jeweiligen Wickelkopfbereichs und/oder sich in radialer Richtung im kompletten Bereich zwischen dem zumindest einen Gehäuseteil und der Welle erstreckt.

Ist das erste Kühlmedium als Luft und die zumindest eine Strömungsmaschine als Wellenlüfter ausgeführt, kann die erwärmte Luft über das als Luftleitblech ausgebildete erste Kühlelement und durch dessen Kühlrippen gelenkt werden. Diese Kühlrippen befinden sich an der radialen Innenseite des Maschinengehäuses, z. B. in Form eines eingeschrumpften Ringes. Diese Kühlrippen können auch radial in Richtung Maschinenachse hin verlängert sein, um die effektive Rückkühloberfläche zu vergrößern. Die rückgekühlte Luft wird wieder vom Wellenlüfter angesaugt.

Bei einer weiteren vorteilhaften Ausgestaltung der Erfindung ist dabei zumindest ein zweites Kühlelement vorgesehen, welches in thermischem Kontakt mit dem zumindest einen ersten Trennelement steht und mittels welchem das erste Kühlmedium kühlbar ist.

Das zumindest eine zweite Kühlelement verbessert den Transport der Abwärme des jeweiligen Wickelkopfs an das im zumindest einen ersten Kühlkanal strömende Wasser, beispielsweise indem das zumindest eine zweite Kühlelement als Kühlrippe bzw. Mehrzahl von Kühlrippen ausgeführt ist. Dabei ist denkbar, dass das jeweilige erste Trennelement und das jeweilige zweite Kühlelement einstückig ausgeführt sind. Vorteilhafterweise ist das zumindest eine zweite Kühlelement im jeweiligen Wickelkopfbereich angeordnet, in welchem das erste Kühlmedium zirkulieren kann.

Eine weitere Optimierung kann dadurch erreicht werden, dass das zumindest eine zweite Kühlelement eine besonders große Oberfläche aufweist, beispielsweise indem sich das zumindest eine zweite Kühlelement in radialer Richtung zwischen dem zumindest einen Gehäuseteil und der Welle erstreckt. Weiterhin kann das zumindest eine zweite Kühlelement strömungstechnisch derart angeordnet sein, dass der Strömungswiderstand der Strömung des ersten Kühlmediums verringert wird und gleichzeitig eine Umlenkung der Strömung erreicht wird. Das zumindest eine zweite Kühlelement kann sich beispielsweise in radialer Richtung zwischen dem zumindest einen Gehäuseteil und der Welle erstrecken.

Eine besonders hohe Kühlleistung lässt sich insbesondere dadurch erreichen, dass jeweils zumindest ein erstes Kühlelement und zumindest ein zweites Kühlelement vorgesehen sind.

Beispielsweise ist das erste Kühlmedium Luft und die zumindest eine Strömungsmaschine entsprechend als ein oder mehrere Wellenlüfter ausgeführt. Somit kann die erwärmte Luft über das als Luftleitblech ausgestaltete zweite Kühlelement gelenkt werden und durch Kühlrippen des Luftleitblechs strömen. Diese Kühlrippen befinden sich axial auf dem Lagerschild an der Innenseite des Maschinenraums. Das Luftleitblech ist zur Welle hin geöffnet, wodurch die rückgekühlte Luft wieder vom Wellenlüfter angesaugt wird, und der Belüftungskreislauf damit geschlossen wird.

Bei einer weiteren vorteilhaften Ausgestaltung der Erfindung sind die zumindest eine erste Einlassöffnung und/oder die zumindest eine erste Auslassöffnung dabei derart ausgeformt, dass bei einer Relativbewegung des Gondelantriebs in Bezug auf das den Gondelantrieb umgebende Wasser eine Strömungsgeschwindigkeit des durch den zumindest einen ersten Kühlkanal strömenden Wassers erhöhbar ist.

Die Erhöhung der Strömungsgeschwindigkeit kann beispielsweise durch eine trichterförmige Einlassöffnung und/oder Auslassöffnung erreicht werden. Die Einlassöffnung und/oder die Auslassöffnung kann insbesondere in der Form einer Windhutze ausgeformt sein, wie sie für Dorade-Lüfter eingesetzt wird, gegebenenfalls unter Berücksichtigung strömungstechnischer Anpassungen für den Einsatz im Wasser. Vorteilhafterweise sind die Einlassöffnung als Düse und die Auslassöffnung als Diffusor ausgeführt.

Insbesondere kann zumindest ein Leitelement vorgesehen sein, welches Verwirbelungen aufgrund von turbulenter Strömung verringert bzw. verhindert und dabei eine laminare Strömung des Wassers durch den jeweiligen ersten Kühlkanal stabilisiert. Das zumindest eine Leitelement kann beispielsweise plan oder mantelförmig ausgebildet sein, wobei die Mantelform bezüglich eines Zylinders oder eines sich in axialer Richtung verjüngenden Rotationskörpers vorliegen kann und beispielsweise in Strömungsrichtung ausgerichtet ist.

Beispielsweise kann die Einlassöffnung und/oder Auslassöffnung als eine Art Schnorchel ausgebildet sein, durch welchen das strömende Meerwasser direkt umgeleitet wird.

Die Erhöhung der Strömungsgeschwindigkeit kann auch durch die zuvor erläuterte Spezialbeschichtung erreicht werden und/oder dadurch, dass die Oberfläche des jeweiligen Kühlkanals zumindest teilweise ähnlich einer Haihaut ausgestaltet ist, wie es von speziellen Schwimmanzügen bekannt ist.

Bei einer weiteren vorteilhaften Ausgestaltung der Erfindung weist der elektrische Gondelantrieb einen Rotor auf, der zumindest abschnittsweise hohlzylinderförmig ausgeformt ist, wobei am einen axialen Ende des Gondelantriebs eine zweite Einlassöffnung und an anderen axialen Ende des Gondelantriebs eine zweite Auslassöffnung vorgesehen sind, wobei zwischen der zweiten Einlassöffnung und der zweiten Auslassöffnung ein zweiter, im Wesentlichen in axialer Richtung verlaufender Kühlkanal vorgesehen ist, welcher durch den hohlzylinderförmigen Abschnitt des Rotors hindurch führt, wobei bei einer Relativbewegung des Gondelantriebs in Bezug auf den Gondelantrieb zumindest teilweise umgebendes Wasser das Wasser durch die zweite Einlassöffnung, den zweiten Kühlkanal und die zweite Auslassöffnung hindurch strömen kann, wobei das durch den zweiten Kühlkanal strömende Wasser durch zumindest ein zweites Trennelement vom ersten Kühlmedium getrennt ist.

Durch den zweiten Kühlkanal ist eine besonders leistungsstarke Kühlung des elektrischen Gondelantriebs möglich, da das den Gondelantrieb umgebende Wasser besonders verlustarm durch den Gondelantrieb geleitet werden kann. Dabei wird die größte Kühlleistung dann erreicht, wenn die Relativbewegung des Gondelantriebs in Bezug auf das Wasser am größten ist, was üblicherweise auch jene Betriebsart des Gondelantriebs ist, bei der am meisten Abwärme erzeugt wird.

Das zumindest eine zweite Trennelement ist vorteilhafterweise derart angeordnet, dass es den jeweiligen Wickelkopfbereich nach radial innen begrenzt und somit in direktem thermischem Kontakt mit dem ersten Kühlmedium ist. Dadurch wird eine verbesserte Kühlung des jeweiligen Wickelkopfs erreicht. Von besonderem Vorteil ist bei dem zweiten Kühlkanal, dass neben einer effektiven Kühlung des Wickelkopfs auch eine verbesserte Kühlung der axialen Mitte des Elektromotors erreicht werden kann, weil der zweite Kühlkanal das kühlere Wasser auch an diesen als "hot spot" bekannten Ort des Elektromotors führt.

Insbesondere kann der zweite Kühlkanal entlang der Achse des elektrischen Gondelantriebs angeordnet sein und in axialer Richtung komplett durch den elektrischen Gondelantrieb hindurch führen. Hierzu ist auch die Welle hohlzylinderförmig ausgeführt, wobei der zweite Kühlkanal innerhalb der Welle angeordnet ist.

Die Strömungsgeschwindigkeit des durch den zweiten Kühlkanal strömenden Wassers kann dadurch erreicht werden, dass die innere Mantelfläche des zweiten Kühlkanals derart ausgeformte Leitelemente aufweist, dass bei einer Drehung der Welle bzw. des Rotors das im zweiten Kühlkanal befindliche Wasser von der zweiten Einlassöffnung zur zweiten Auslassöffnung bewegt wird. Dies kann beispielsweise durch eine Anordnung von Propellerblättern bzw. einer zusätzlichen Strömungsmaschine und/oder die Ausformung einer Förderschnecke im zweiten Kühlkanal erreicht werden.

Denkbar ist weiterhin, dass der zumindest eine erste Kühlkanal mit dem zweiten Kühlkanal verbunden ist. Somit strömt das Wasser zunächst in radialer Richtung von außen nach innen durch den zumindest ersten Kühlkanal, anschließend in axialer Richtung durch den zweiten Kühlkanal und schließlich in radialer Richtung von innen nach außen durch einen weiteren ersten Kühlkanal. Hierzu erstreckt sich der zweite Kühlkanal in axialer Richtung beispielsweise entlang des Stators, wobei der jeweilige erste Kühlkanal am jeweiligen axialen Ende des zweiten Kühlkanals angeordnet ist.

Bei einer weiteren vorteilhaften Ausgestaltung der Erfindung ist dabei zumindest ein drittes Kühlelement vorgesehen, welches in thermischem Kontakt mit dem zumindest einen zweiten Trennelement steht und mittels welchem das erste Kühlmedium kühlbar ist.

Das zumindest eine dritte Kühlelement kann ähnlich wie das zumindest eine erste oder zweite Kühlelement ausgeführt sein, beispielsweise als Kühlrippen bzw. Mehrzahl von Kühlrippen. Zusätzlich kann das zumindest eine erste Kühlelement für eine Führung des ersten Kühlmediums ausgelegt sein, wie weiter oben schon für das zumindest eine erste oder zweite Kühlelement erläutert.

Das jeweilige dritte Kühlelement kann beispielsweise in Form von Kühlrippen auf der Welle bzw. zumindest einem der Wellenstummel appliziert sein, welche ebenfalls über das Meerwasser gekühlt werden. Ist das erste Kühlmedium Luft, saugt der Wellenlüfter die durch die Kühlrippen rückgekühlte Luft an und leitet die Kühlluft auf die Wickelköpfe.

Das dritte Kühlelement verbessert die Kühlung des jeweiligen Wickelkopfs, da Abwärme zusätzlich an das im zweiten Kühlkanal strömende Wasser abgegeben werden kann.

Bei einer weiteren vorteilhaften Ausgestaltung der Erfindung weist der Rotor dabei einen Zwischenraum zwischen einem inneren Hohlzylinder, welcher den zweiten Kühlkanal im axialen Bereich des inneren Hohlzylinders nach radial außen begrenzt, und einem äußeren Hohlzylinder auf, welcher koaxial zum inneren Hohlzylinder angeordnet ist und welcher einen größeren Durchmesser als der innere Hohlzylinder aufweist, wobei das erste Kühlmedium durch den Zwischenraum umwälzbar ist.

Die Kühlung des elektrischen Gondelantriebs lässt sich durch den Zwischenraum zwischen dem inneren Hohlzylinder und dem äußeren Hohlzylinder weiter verbessern, indem das erste Kühlmedium durch den Zwischenraum umwälzbar ist. Dies wird dadurch erreicht, dass der innere Hohlzylinder in direktem Kontakt mit dem im zweiten Kühlkanal fließenden Wasser steht und somit vergleichsweise kühl ist. Tritt das erste Kühlmedium während des Umwälzens in den Zwischenraum ein und kommt mit dem inneren Hohlzylinder in Kontakt, kann das erste Kühlmedium eine beträchtliche Menge Abwärme an den inneren Hohlzylinder und somit an das im zweiten Kühlkanal strömende Wasser abgeben. Neben einer verbesserten Kühlung des jeweiligen Wickelkopfs kann zusätzlich weitere Abwärme vom Rotor, insbesondere von der axialen Mitte des Rotors, an das im Zwischenraum befindliche erste Kühlmedium und damit an das im zweiten Kühlkanal strömende Wasser abgegeben werden.

Um die Umwälzung des ersten Kühlmediums durch den Zwischenraum zu erleichtern, können weitere Leitelemente vorgesehen sein, welche die Strömung des ersten Kühlmediums verlustarm in den Zwischenraum hinein- und wieder hinausführt. Denkbar ist weiterhin das das erste Kühlmedium an einem axialen Ende des Rotors in den Zwischenraum hinein geführt wird und am anderen axialen Ende des Rotors aus dem Zwischenraum heraus geführt wird.

Insbesondere kann der innere Hohlzylinder als Teil der Welle ausgeführt sein und der äußere Hohlzylinder als Tragstruktur von Rotoraktivteilen, wie zum Beispiel dem Rotorblechpaket oder Permanentmagneten.

Der innere Hohlzylinder ist vorzugsweise zumindest teilweise aus einem besonders korrosionsbeständigen und gleichzeitig gut wärmeleitenden Material, beispielsweise einer Kupfer-Aluminium-Legierung bzw. Bronze.

Bei einer weiteren vorteilhaften Ausgestaltung der Erfindung ist dabei zumindest eine dritte Einlassöffnung vorgesehen, durch welche jeweils das erste Kühlmedium in den Zwischenraum hinein führbar ist, wobei zumindest eine dritte Auslassöffnung vorgesehen ist, durch welche jeweils das erste Kühlmedium aus dem Zwischenraum heraus führbar ist, wobei zwischen dem inneren Hohlzylinder und dem äußeren Hohlzylinder zumindest ein drittes Trennelement vorgesehen ist, mittels welchem das durch die zumindest eine dritte Einlassöffnung in den Zwischenraum hinein führbare erste Kühlmedium an der radialen Außenfläche des inneren Hohlzylinders entlang zur axialen Mitte führbar ist und mittels welchem das erste Kühlmedium von der axialen Mitte entlang der radialen Innenfläche des äußeren Hohlzylinders zur zumindest einen dritten Auslassöffnung führbar ist.

Durch eine derartige Führung des ersten Kühlmediums kann die zumindest eine Strömungsmaschine beispielsweise als Radiallüfter ausgeführt sein, so dass das erste Kühlmedium zunächst gegen den jeweiligen Wickelkopf gepresst wird und sich stark erhitzt und anschließend im Bereich des jeweiligen Wickelkopfs zur jeweiligen dritten Einlassöffnung geführt wird.

Insbesondere ist im Bereich des jeweiligen Wickelkopfs die Kühlung des ersten Kühlmediums mittels eines jeweiligen ersten, zweiten und/oder dritten Kühlelements möglich, wie oben erläutert wurde. Nachdem das erste Kühlmedium die jeweilige dritte Einlassöffnung passiert hat, wird es an der radialen Außenfläche des inneren Hohlzylinders entlang im Zwischenraum geleitet, wodurch es eine beträchtliche Menge Abwärme an den inneren Hohlzylinder und somit an das im zweiten Kühlkanal strömende Wasser abgeben kann. Das erste Kühlmedium strömt dabei in etwa zur axialen Mitte des Zwischenraums, da es durch das dritte Trennelement an einer vorherigen Strömung nach radial außen gehindert wird. Vorzugsweise weist das dritte Trennelement im Bereich der axialen Mitte des Rotors eine oder mehrere Öffnungen auf, wodurch das erste Kühlmedium nach radial außen zur radialen Innenfläche des äußeren Hohlzylinders strömen kann und schließlich an das jeweilige axiale Ende des Zwischenraums strömt. Den Zwischenraum kann das erste Kühlmedium schließlich durch die jeweilige dritte Austrittsöffnung verlassen, um direkt danach von der zumindest einen Strömungsmaschine erfasst und beschleunigt zu werden.

Insbesondere verfügt das im Hohlraum befindliche und als Rohr ausgeführte Trennblech in seiner Mitte über Öffnungen zur Verbindung des radial inneren Bereichs des Hohlraums mit dem radial äußeren Bereichs des Hohlraums. Aus dem Hohlraum saugt ein Wellenlüfter gekühlte Luft, für den Fall dass das erste Kühlmedium als Luft ausgeführt ist. Nach der Durchströmung der Wickelköpfe wird die erwärmte Luft wieder in das Hohlrohr eingesaugt, und an der Wand des inneren Hohlrohres insbesondere über Konvektion und den Wärmeaustausch mit dem Meerwasser gekühlt. Durch die Verbindungsöffnungen in der Mitte des Rohres kann die rückgekühlte Luft dann wieder vom Wellenlüfter angesaugt werden, wodurch der Kreislauf geschlossen ist.

Prinzipiell ist dabei auch eine umgekehrte Strömung des ersten Kühlmediums im Zwischenraum realisierbar, insbesondere wenn das erste Kühlmedium im Bereich des jeweiligen Wickelkopfs durch ein erstes, zweites und/oder drittes Kühlelement schon abgekühlt wurde und das erste Kühlmedium zunächst die radiale Innenseite des äußeren Hohlzylinders kühlen soll, bevor es an der radialen Außenseite des inneren Hohlzylinders neuerlich abgekühlt wird. Für ein derartiges Szenario ist die Funktion der jeweiligen dritten Einlassöffnung und der jeweiligen dritten Auslassöffnung vertauscht, wobei gegebenenfalls Leitelemente vorgesehen werden, um das aus dem Zwischenraum herausströmende erste Kühlmedium der jeweiligen Strömungsmaschine effektiv zuführen zu können.

Bei einer weiteren vorteilhaften Ausgestaltung der Erfindung weist der Rotor dabei einen Zwischenraum zwischen einem inneren Hohlzylinder, welcher den zweiten Kühlkanal im axialen Bereich des inneren Hohlzylinders nach radial außen begrenzt, und einem äußeren Hohlzylinder auf, welcher koaxial zum inneren Hohlzylinder angeordnet ist und welcher einen größeren Durchmesser als der innere Hohlzylinder aufweist, wobei zumindest ein Wärmetauscher fluiddicht mit dem Zwischenraum verbunden ist, wobei ein zweites Kühlmedium durch den Zwischenraum und den zumindest einen Wärmetauscher umwälzbar ist, wobei das erste Kühlmedium mittels des zumindest einen Wärmetauschers kühlbar ist.

Der weiter oben schon erläuterte Zwischenraum ist gemäß dieser Ausgestaltung der Erfindung mit einem zweiten Kühlmedium gefüllt, welches seine Abwärme an den inneren Hohlzylinder und somit an das im zweiten Kühlkanal befindliche Wasser abgeben kann. Das zweite Kühlmedium wird aus dem Zwischenraum in den zumindest einen Wärmetauscher geleitet, welcher fluiddicht mit dem Zwischenraum verbunden ist. Vorzugsweise ist der jeweilige Wärmetauscher im jeweiligen Wickelkopfbereich angeordnet, in welchem das erste Kühlmedium umgewälzt wird.

Generell dient das zweite Kühlmedium zur Rückkühlung des ersten Kühlmediums, indem über den jeweiligen Wärmetauscher Abwärme vom ersten Kühlmedium an das zweite Kühlmedium abgegeben wird. Das zweite Kühlmedium kann diese Abwärme in den Zwischenraum transportieren und schließlich an den inneren Hohlzylinder und das im zweiten Kühlkanal befindliche Wasser abgeben. Dadurch wird eine sehr leistungsstarke Kühlung des elektrischen Gondelantriebs erreicht.

Beispielsweise kann das zweite Kühlmedium durch eine weitere Strömungsmaschine umgewälzt werden, welche innerhalb des Kühlkreislaufs des zweiten Kühlmediums angeordnet ist. Denkbar ist auch, dass das zweite Kühlmedium mittels Konvektion umgewälzt wird.

Das zweite Kühlmedium wird also zum Wärmetauscher im Maschineninneren geleitet, welches wiederum vom ersten Kühlmedium, z. B. Kühlluft, in der Umgebung der Wickelköpfe umströmt wird. Die Kühlluft wird über eine als Wellenlüfter ausgeführte Strömungsmaschine angesaugt, und direkt auf die Wickelköpfe befördert und anschließend um den Wärmetauscher geleitet. Der Wärmetauscher kann dabei derart konzipiert sein, dass dieser wie eine Radialpumpe das zweite Kühlmedium, insbesondere Öl, automatisch fördert. Das erwärmte Öl fließt wieder in den Zwischenraum zwischen dem inneren Hohlzylinder und dem äußeren Hohlzylinder, wo es über die Wand des inneren Hohlzylinders beispielsweise über Konvektion und thermischem Kontakt mit Meerwasser rückgekühlt wird.

Bei einer weiteren vorteilhaften Ausgestaltung der Erfindung ist zumindest eine dritte Einlassöffnung vorgesehen, durch welche das zweite Kühlmedium vom Wärmetauscher in den Zwischenraum hinein führbar ist, wobei zumindest eine dritte Auslassöffnung vorgesehen ist, durch welche das zweite Kühlmedium aus dem Zwischenraum heraus in den Wärmetauscher führbar ist, wobei ein drittes Trennelement zwischen dem inneren Hohlzylinder und dem äußeren Hohlzylinder vorgesehen ist, mittels welchem das durch die zumindest eine dritte Einlassöffnung in den Zwischenraum hinein führbare zweite Kühlmedium an der radialen Außenfläche des inneren Hohlzylinders entlang zur axialen Mitte führbar ist und mittels welchem das zweite Kühlmedium von der axialen Mitte entlang der radialen fläche des äußeren Hohlzylinders zur zumindest einen dritten Auslassöffnung führbar ist.

Durch eine derartige Führung des zweiten Kühlmediums und die Anordnung des dritten Trennelements zwischen dem inneren Hohlzylinder und dem äußeren Hohlzylinder kann die Kühlung weiter optimiert werden, wie weiter oben bei der entsprechenden Ausgestaltung der Erfindung erläutert, bei welcher ebenfalls ein drittes Trennelement vorgesehen ist, jedoch das erste Kühlmedium durch den Zwischenraum umwälzbar ist.

Vorzugsweise ist das zweite Kühlmedium Öl, denkbar sind allerdings auch alternative, bekannte Kühlmittel.

Bei einer weiteren vorteilhaften Ausgestaltung der Erfindung ist dabei im axialen Bereich des Rotors ein koaxial zum hohlzylinderförmigen Abschnitt des Rotors angeordnetes Umlenkelement vorgesehen, wobei der Außendurchmesser des Umlenkelements kleiner als der Innendurchmesser des hohlzylinderförmigen Abschnitts des Rotors ist.

Das Umlenkelement befindet sich somit im zweiten Kühlkanal und wird von im zweiten Kühlkanal strömenden Wasser umströmt. Insbesondere kann das Umlenkelement Förderelemente aufweisen, die das im zweiten Kühlkanal befindliche Wasser von der zweiten Einlassöffnung zur zweiten Auslassöffnung bewegen. Beispielsweise weist das Umlenkelement hierfür an seinem, der zweiten Einlassöffnung zugewandten axialen Ende Förderelemente auf, die eine Radialpumpfunktion und/oder eine Axialpumpfunktion erfüllen und somit in Richtung der zweiten Auslassöffnung pressen. Das Umlenkelement kann dazu verwendet werden, die Strömungsgeschwindigkeit des im zweiten Kühlkanal fließenden Wassers zu erhöhen und gleichzeitig die für den Wärmetransport vom Rotor zum Wasser zur Verfügung stehenden Oberfläche erhöhen, indem der Durchmesser des inneren Hohlzylinders gegenüber dem Durchmesser der Bohrung der Welle aufgeweitet wird.

Generell kann der elektrische Gondelantrieb mehrere der erläuterten Kühlkonzepte in Kombination aufweisen, um eine besonders wirkungsvolle Kühlung des elektrischen Gondelantriebs zu erreichen.

Insgesamt wird also ein elektrischer Gondelantrieb bereitgestellt, der für seine Funktion ausschließlich eine Energiezufuhr vom Schiffsrumpf erfordert. Auf eine Fremdbelüftung kann vollständig verzichtet werden, wodurch erhebliche Kosten und Montagezeiten entfallen. Außerdem entfällt der Aufbau im Innern des Schiffsrumpfs für Rückkühl- und Belüftungselemente, wodurch insgesamt Platz eingespart wird. Weiterhin erhöht sich der Gesamtwirkungsgrad der Maschine, da keine Energie für Fremdlüfter und Kühlpumpen benötigt wird.

Vorzugsweise hat der elektrische Gondelantrieb eine elektrische Leistung von mindestens 1 MW, vorzugsweise mehr als 10 MW.

Im Folgenden wird die Erfindung anhand der in den Figuren dargestellten Ausführungsbeispiele näher beschrieben und erläutert. Es zeigen:
- FIG 1&2: ein erstes und zweites Beispiel eines elektrischen Gondelantriebs und
- FIG 3-8: ein erstes bis sechstes Ausführungsbeispiel des erfindungsgemäßen elektrischen Gondelantriebs.

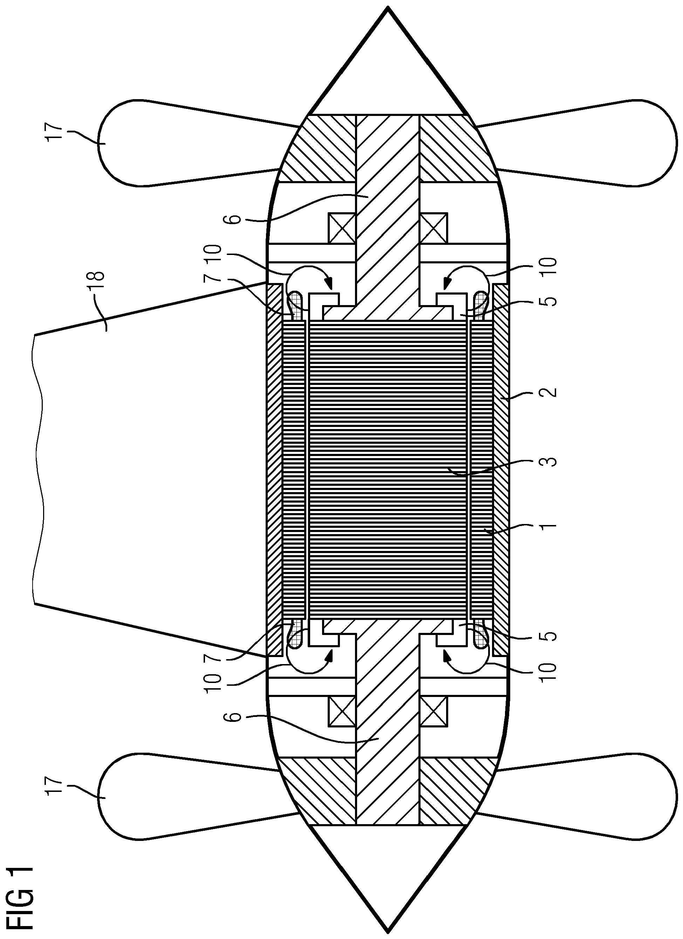

Figur 1 zeigt ein erstes Beispiel eines elektrischen Gondelantriebs. Der Gondelantrieb ist über einen Schaft 18 drehbar mit einem Schiffsrumpf verbindbar und weist Propeller 17 auf, die über eine drehbar gelagerte Welle 6 mit einem Rotor 3 eines Elektromotors des Gondelantriebs verbunden ist. Im Rahmen des Beispiels setzt sich die Welle 6 aus zwei Wellenstümpfen zusammen, zwischen welchen der Rotor 3 angeordnet ist. Der Rotor 3 wird in radialer Richtung von einem Stator 1 des Elektromotors umschlossen, wobei zwischen dem Rotor 3 und dem Stator 1 ein Luftspalt verbleibt. Der Stator 1 wird in radialer Richtung durch das Gehäuseteil 2 umschlossen, welches sich im Rahmen des Ausführungsbeispiels über die komplette axiale Länge des Stators 1 und noch darüber hinaus erstreckt.

An der jeweiligen axialen Stirnseite des Stators 1 ragen Wickelköpfe 7 aus dem Stator 1 heraus, welche im Betrieb des Elektromotors eine beträchtliche Menge Abwärme erzeugen. Zur Kühlung der Wickelköpfe 7 ist jeweils eine Strömungsmaschine 5 vorgesehen, welche drehfest mit der Welle 6 bzw. dem Rotor 3 verbunden ist. Durch die jeweilige Strömungsmaschine 5 wird im jeweiligen Wickelkopfbereich ein erstes Kühlmedium umgewälzt. Wie durch den mit dem Bezugszeichen 10 gekennzeichneten Pfeil angedeutet, wird das erste Kühlmedium von der jeweiligen Strömungsmaschine 5 nach radial außen zum jeweiligen Wickelkopf 7 befördert, wodurch der jeweilige Wickelkopf 7 abgekühlt werden kann. Das erste Kühlmedium wird anschließend umgelenkt und schließlich wieder von der jeweiligen Strömungsmaschine 5 angesaugt, wodurch sich dieser Kühlkreislauf schließt.

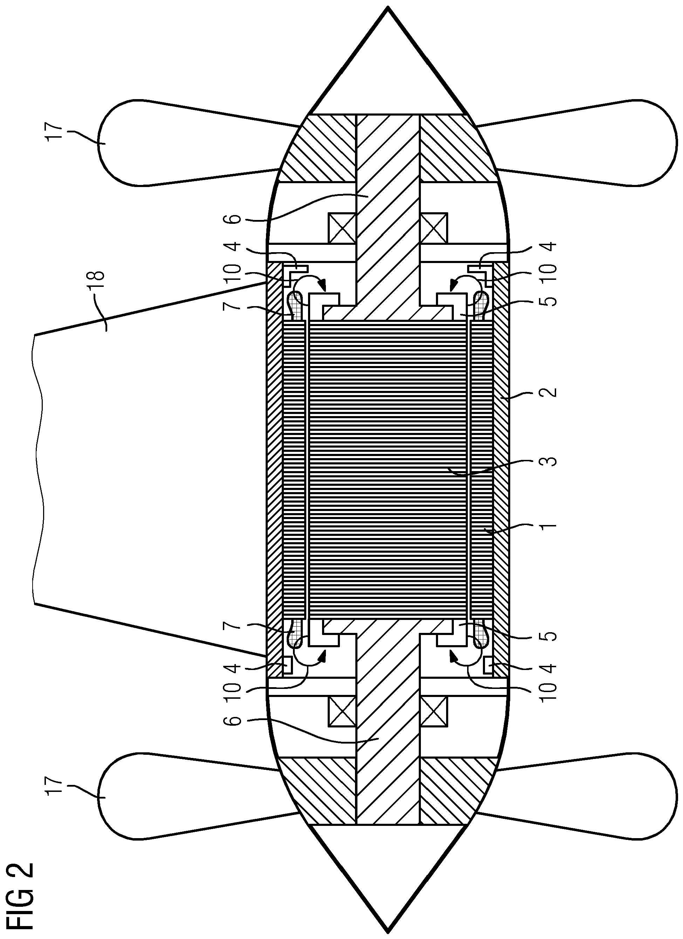

Figur 2 zeigt ein zweites Beispiel eines elektrischen Gondelantriebs. Da das zweite Beispiel dem ersten Beispiel recht ähnlich ist, werden im Folgenden nur die Unterschiede erläutert. Der elektrische Gondelantrieb weist zusätzlich erste Kühlelemente 4 auf, welche in thermischem Kontakt mit dem Gehäuseteil 2 sind, indem sie direkt auf dem Gehäuseteil 2 angeordnet sind. Die ersten Kühlelemente 4 können beispielsweise als Kühlrippen ausgeführt sein, welche einen gewissen Bereich des Gehäuseteils 2 in axialer Richtung abdecken und dabei nach radial innen ragen. Beispielsweise können die ersten Kühlelemente 4 somit als mit Kühlrippen ausgestatteter Kühlring ausgeführt sein. Wie die beiden ersten Kühlelemente 4, welche in der Figur 2 rechts des Stators 1 dargestellt sind, können die ersten Kühlelemente 4 dabei Abschnitte aufweisen, welche weiter nach radial innen ragen. Vorzugsweise sind jene Abschnitte am äußeren axialen Ende des jeweiligen Wickelkopfbereichs, in welchem das erste Kühlmedium zirkulieren kann, angeordnet, so dass sich die ersten Kühlelemente 4 zusätzlich eine Umlenkung der Strömung des ersten Kühlmediums bewirken können.

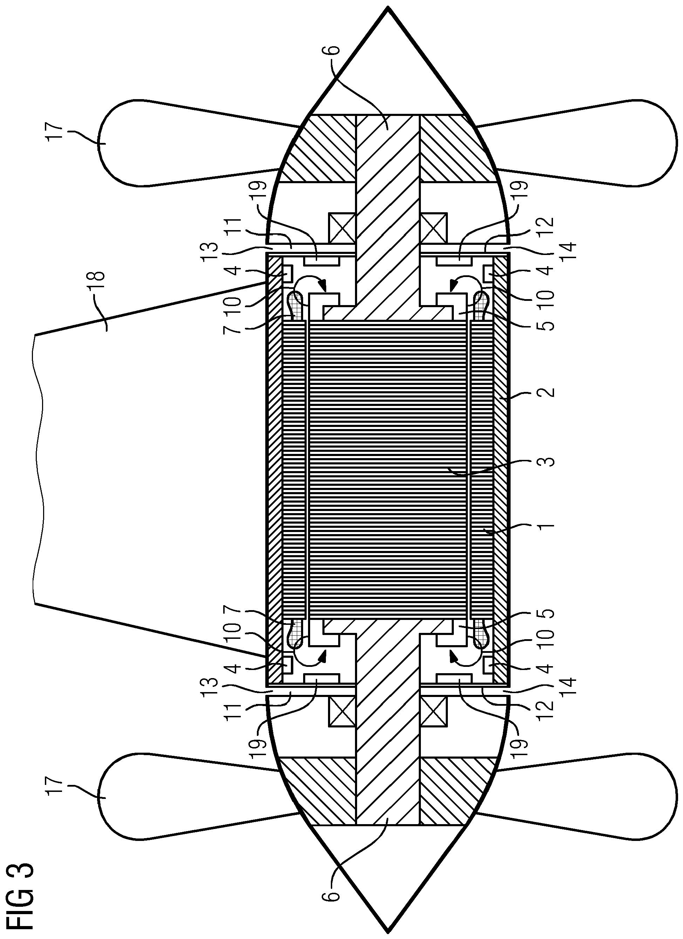

Figur 3 zeigt ein erstes Ausführungsbeispiel des erfindungsgemäßen elektrischen Gondelantriebs, wobei lediglich die Unterschiede zum zweiten Beispiel erläutert werden. Der elektrische Gondelantrieb weist zwei erste Kühlkanäle 11 auf, welche jeweils im Wesentlichen in einer Richtung senkrecht zur Achse des Gondelantriebs verlaufen. Im Rahmen des ersten Ausführungsbeispiels verlaufen die beiden ersten Kühlkanäle 11 dabei in der Umgebung des jeweiligen Lagerschilds bzw. im jeweiligen Lagerschild. Die ersten Kühlkanäle 11 weisen jeweils eine erste Einlassöffnung 13 und eine erste Auslassöffnung 14 auf, durch welche den Gondelantrieb umgebendes Wasser hindurch fließen kann.

Der jeweilige erste Kühlkanal 11 ist dabei vom jeweiligen Wickelkopfbereich, in welchem das erste Kühlmedium zirkuliert, durch ein erstes Trennelement 12 getrennt. Über das jeweilige erste Trennelement 12 kann somit eine beträchtliche Menge Abwärme an das durch den jeweiligen ersten Kühlkanal 11 strömende Wasser abgegeben werden. Der Wärmetransport wird durch zweite Kühlelemente 19 weiter verbessert, welche im jeweiligen Wickelkopfbereich am jeweiligen ersten Trennelement 12 angebracht sind und beispielsweise Kühlrippen aufweisen, welche die Abwärme vom ersten Kühlmedium aufnehmen und über das jeweilige erste Trennelement 12 an das im jeweiligen ersten Kühlkanal 11 befindliche Wasser abgeben können.

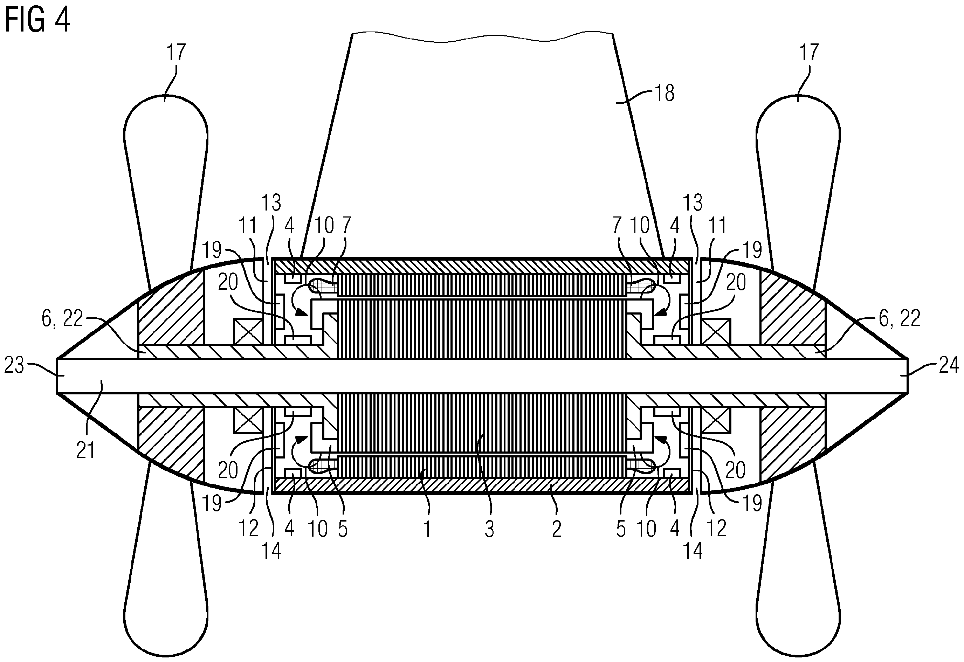

Figur 4 zeigt ein zweites Ausführungsbeispiel des erfindungsgemäßen elektrischen Gondelantriebs, wobei lediglich die Unterschiede zum ersten Ausführungsbeispiel erläutert werden. Der Gondelantrieb weist einen zweiten Kühlkanal 21 auf, welcher entlang der Achse des Gondelantriebs durch diesen hindurch führt. Dabei kann den Gondelantrieb umgebendes Wasser durch eine zweite Einlassöffnung 23 in einen zweiten Kühlkanal 21 eindringen und diesen durch eine zweite Auslassöffnung 24 wieder verlassen. Hierzu sind der Rotor 3 und die Welle 6 bzw. die beiden Wellenstümpfe jeweils hohlzylinderförmig ausgeformt. Der jeweilige Wickelkopfbereich, in welchem jeweils das erste Kühlmedium zirkulieren kann, wird dabei durch ein zweites Trennelement 22 vom zweiten Kühlkanal 21 getrennt, wobei im Rahmen des Ausführungsbeispiels die Welle 6 bzw. der jeweilige Wellenstumpf gleichzeitig als das zweite Trennelement 22 fungiert. Zur Verbesserung der Kühlung ist am radial inneren Ende des jeweiligen Wickelkopfbereichs ein drittes Kühlelement 20 angeordnet, welches in thermischem Kontakt mit dem zweiten Trennelement 22 ist. Das jeweilige dritte Kühlelement 20 weist beispielsweise Kühlrippen auf, mittels welchem Abwärme vom ersten Kühlmedium aufgenommen werden kann und über das zweite Trennelement 22 an das im zweiten Kühlkanal 21 befindliche Wasser abgegeben werden kann. Weiterhin kann das jeweilige dritte Kühlelement 20 derart ausgebildet sein, dass die Strömung des ersten Kühlmediums verlustarm zur jeweiligen Strömungsmaschine 5 umgelenkt wird.

Prinzipiell ist dabei denkbar, dass das zweite Ausführungsbeispiel auch ohne die im Zusammenhang mit dem zweiten Ausführungsbeispiel erläuterten ersten Kühlkanäle 11, die ersten Kühlelemente 4 und/oder die zweiten Kühlelemente 19 ausgeführt wird.

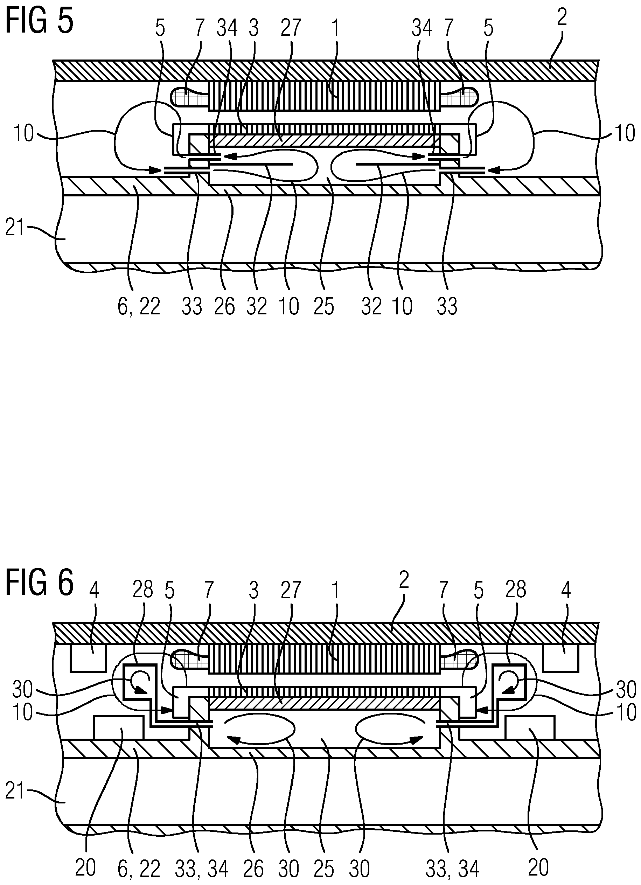

Figur 5 zeigt ein drittes Ausführungsbeispiel des erfindungsgemäßen elektrischen Gondelantriebs, wobei lediglich ein Ausschnitt eines Längsschnitts gezeigt ist. Der gezeigte Ausschnitt stellt lediglich die beiden Wickelkopfbereiche beiderseits des Rotors 3 sowie den Bereich zwischen den beiden Wickelkopfbereichen dar, wobei der restliche Gondelantrieb insbesondere wie in den Figuren 1-4 sowie 7 und 8 dargestellt ausgeführt sein kann.

Der Rotor 3 weist einen Zwischenraum 25 zwischen einem inneren Hohlzylinder 26 und einem äußeren Hohlzylinder 27 auf, wobei das erste Kühlmedium vom jeweiligen Wickelkopfbereich durch eine jeweilige dritte Einlassöffnung 33 in den Zwischenraum 25 eindringen kann und den Zwischenraum 25 durch eine jeweilige dritte Auslassöffnung 34 verlassen kann. Dabei ist die jeweilige dritte Einlassöffnung 33 radial weiter innen als die jeweilige dritte Auslassöffnung 34 angeordnet, wobei ein drittes Trennelement 32 in radialer Richtung zwischen der jeweiligen dritten Einlassöffnung 33 und der jeweiligen dritten Auslassöffnung 34 vorgesehen ist. Das dritte Trennelement 32 weist an seiner axialen Mitte eine Öffnung bzw. eine Mehrzahl von Öffnungen auf, durch welche das erste Kühlmedium in radialer Richtung hindurch strömen kann. Somit sorgt das dritte Trennelement 32 dafür, dass das durch die jeweilige dritte Auslassöffnung 33 hindurch strömende erste Kühlmedium zunächst in axialer Richtung an der äußeren Oberfläche des inneren Hohlzylinders 26 entlang zur axialen Mitte des Rotors 3 strömt und erst im Bereich der axialen Mitte nach radial außen strömt, um anschließend zum jeweiligen axialen Ende des Zwischenraums an der inneren Oberfläche des äußeren Hohlzylinders 27 entlang zu strömen und den Zwischenraum 25 durch die jeweilige dritte Auslassöffnung 34 zu verlassen. Das aus der jeweiligen dritten Auslassöffnung 34 heraus strömende erste Kühlmedium wird anschließend von der jeweiligen Strömungsmaschine 5 erfasst und nach radial außen zum jeweiligen Wickelkopf 7 beschleunigt, um schließlich in die jeweilige dritte Einlassöffnung 33 gedrückt zu werden und somit den durch das Bezugszeichen 10 gekennzeichneten Kühlkreislauf des ersten Kühlmediums zu schließen.

Alternativ ist denkbar, den erläuterten Kühlkreislauf ohne das dritte Trennelement 32 auszuführen.

Zusätzlich kann dabei der oben erläuterte erste Kühlkanal 11 sowie im jeweiligen Wickelkopfbereich die oben erläuterten ersten Kühlelemente 4, zweiten Kühlelemente 19 und/oder dritten Kühlelemente 20 vorgesehen sein.

Figur 6 zeigt ein viertes Ausführungsbeispiel des erfindungsgemäßen elektrischen Gondelantriebs, wobei lediglich ein dem in Figur 5 ähnlicher Ausschnitt eines Längsschnitts dargestellt ist und lediglich die Unterschiede zum dritten Ausführungsbeispiel erläutert werden. Wiederum kann der restliche Gondelantrieb insbesondere die in den Figuren 1-4 sowie 7 und 8 dargestellt ausgeführt sein.

Im jeweiligen Wickelkopfbereich weist der Gondelantrieb einen mit dem Bezugszeichen 10 gekennzeichneten Kühlkreislauf für das erste Kühlmedium auf, welcher von der jeweiligen Strömungsmaschine 5 über den jeweiligen Wickelkopf 7, das jeweilige erste Kühlelement 4 und das jeweilige dritte Kühlelement 20 führt, bevor das erste Kühlmedium wieder von der jeweiligen Strömungsmaschine 5 erfasst wird. Zusätzlich ist in diesem Kühlkreislauf ein Wärmetauscher 28 angeordnet, welcher neben dem jeweiligen ersten Kühlelement 4 und dem jeweiligen dritten Kühlelement 20 zusätzliche Abwärme aus dem ersten Kühlmedium entnehmen kann. Dabei ist der jeweilige Wärmetauscher 28 Teil eines zweiten Kühlkreislaufs, welcher mit dem Bezugszeichen 30 gekennzeichnet ist und in welchem ein zweites Kühlmedium, beispielsweise Öl, zirkulieren kann.

Das zweite Kühlmedium, welches im Wärmetauscher 28 Abwärme vom ersten Kühlmedium aufnehmen kann, wird vom Wärmetauscher 28 zur jeweiligen dritten Einlassöffnungen 33 geführt, durch welche das zweite Kühlmedium in den Zwischenraum 25 gelangt. Dabei weist der Zwischenraum 25 im Unterschied zum fünften Ausführungsbeispiel kein drittes Trennelement 32 auf. Beispielsweise durch Konvektion gelangt das zweite Kühlmedium zur äußeren Oberfläche des inneren Hohlzylinders 26, wo das zweite Kühlmedium die aufgenommene Abwärme über den inneren Hohlzylinder 26 an das im zweiten Kühlkanal 21 befindliche Wasser abgeben kann und dadurch abgekühlt wird. Anschließend wird das zweite Kühlmedium über die jeweilige dritte Auslassöffnung 34 aus dem Zwischenraum 25 herausgeführt und dem jeweiligen Wärmetauscher 28 zugeführt, was den Kühlkreislauf des zweiten Kühlmediums schließt.

Insbesondere können die jeweilige dritte Einlassöffnung 33 und jeweilige dritte Auslassöffnung 34 in radialer Richtung versetzt zueinander angeordnet sein, um eine Konvektion Strömung des zweiten Kühlmediums zu begünstigen. Gegebenenfalls kann hierzu auch das dritte Trennelement 32 eingebaut werden. Weiterhin ist denkbar, dass das zweite Kühlmedium durch eine weitere Strömungsmaschine umgewälzt wird.

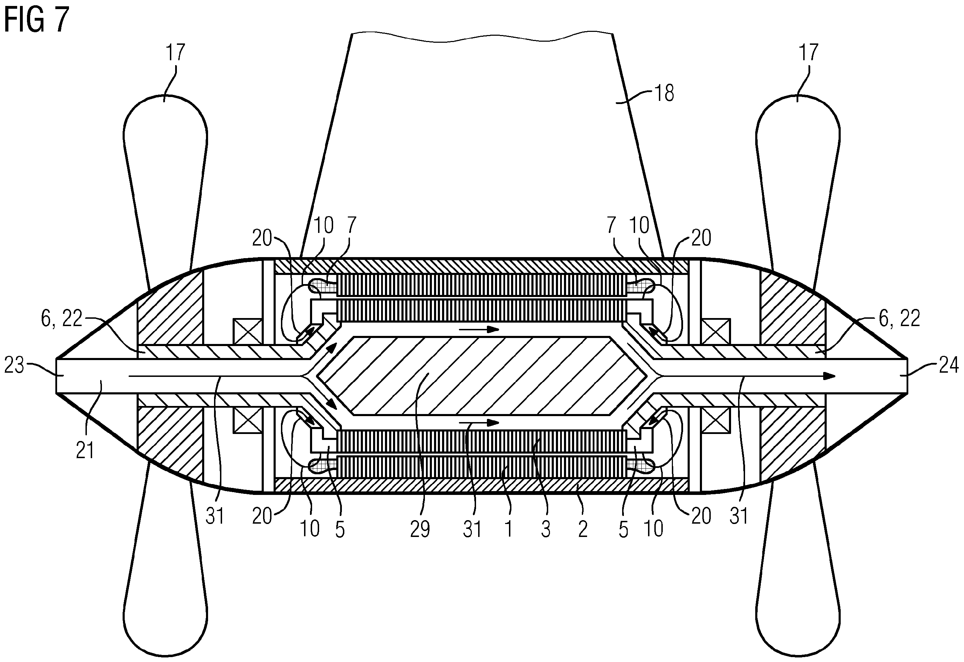

Figur 7 zeigt ein fünftes Ausführungsbeispiel des erfindungsgemäßen elektrischen Gondelantriebs, wobei lediglich die Unterschiede zum vierten Ausführungsbeispiel erläutert werden. Der Gondelantrieb weist ein Umlenkelement 29 auf, welches innerhalb des hohlzylinderförmigen Rotors 3 im zweiten Kühlkanal 21 angeordnet ist. Dabei umströmt das im zweiten Kühlkanal 21 befindliche Wasser das Umlenkelement 29 in axialer Richtung, dargestellt mittels der mit dem Bezugszeichen 31 versehenen Pfeile, und umgibt das Umlenkelement 29 zumindest teilweise in Umfangsrichtung. Vorzugsweise ist das Umlenkelement 29 drehfest mit dem Rotor 3 und/oder der Welle 6 bzw. den Wellenstümpfen verbunden. Insbesondere kann das Umlenkelement 29 Förderelemente aufweisen, beispielsweise an seinem, der zweiten Einlassöffnung 23 zugewandten axialen Ende, wobei die Förderelemente eine Radialpumpfunktion und/oder eine Axialpumpfunktion erfüllen und das Wasser somit in Richtung der zweiten Auslassöffnung 24 pressen.

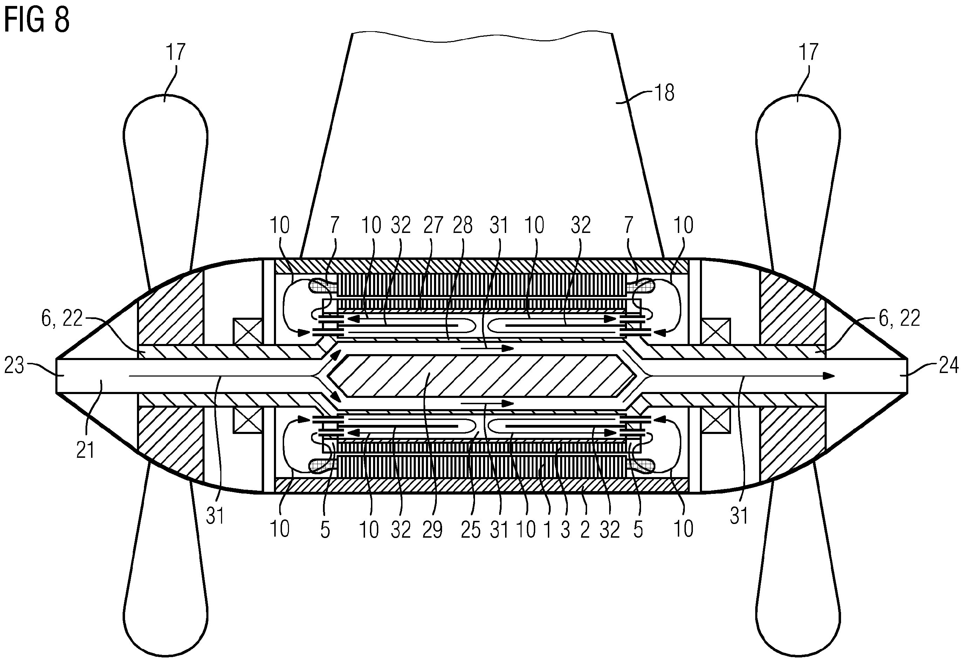

Figur 8 zeigt ein sechstes Ausführungsbeispiel des erfindungsgemäßen elektrischen Gondelantriebs. Das achte Ausführungsbeispiel ist eine Kombination der beiden Kühlkonzepte des siebten Ausführungsbeispiels aufweisend den Umlenkkörper 29 und des fünften Ausführungsbeispiels aufweisend den Hohlraum 25 und das dritte Trennelement 32.

Generell kann der elektrischer Gondelantrieb mehrere der dargestellten und erläuterten Kühlkonzepte in Kombination aufweisen, um eine besonders wirkungsvolle Kühlung des elektrischen Gondelantriebs zu erreichen.

Zusammenfassend betrifft die Erfindung einen elektrischen Gondelantrieb für ein Schiff aufweisend einen Elektromotor mit einem Stator und einer koaxial zum Stator angeordneten Welle, ein Gehäuse mit zumindest einem Gehäuseteil, welches sich in axialer Richtung zumindest teilweise entlang des Stators erstreckt und welches in Umfangsrichtung den Stator zumindest teilweise umfasst, zumindest einen Wickelkopf, der jeweils an einer axialen Stirnseite aus dem Stator herausragt, und zumindest eine Strömungsmaschine, welche zwischen der Welle und dem Gehäuse angeordnet ist und welche drehfest mit der Welle verbunden ist, wobei der zumindest eine Wickelkopf durch ein erstes, mittels der zumindest einen Strömungsmaschine umwälzbares Kühlmedium kühlbar ist. Um einen elektrischen Gondelantrieb mit einer verbesserten Kühlung bereitzustellen, wird vorgeschlagen, dass der elektrische Gondelantriebzumindest eine erste Einlassöffnung und zumindest eine erste Auslassöffnung aufweist, wobei zwischen der jeweiligen ersten Einlassöffnung und der jeweiligen ersten Auslassöffnung zumindest ein erster, im Wesentlichen senkrecht zur axialen Richtung verlaufender Kühlkanal vorgesehen ist, wobei bei einer Relativbewegung des Gondelantriebs in Bezug auf den Gondelantrieb zumindest teilweise umgebendes Wasser das Wasser durch die jeweilige erste Einlassöffnung, den zumindest einen ersten Kühlkanal und die jeweilige erste Auslassöffnung hindurch strömen kann, wobei das durch den zumindest einen ersten Kühlkanal strömende Wasser durch zumindest ein erstes Trennelement vom ersten Kühlmedium getrennt ist.

## Patentansprüche

1. Elektrischer Gondelantrieb für ein Schiff aufweisend
- einen Elektromotor mit einem Stator (1) und einer koaxial zum Stator (1) angeordneten Welle (6),
- ein Gehäuse mit zumindest einem Gehäuseteil (2), welches sich in axialer Richtung zumindest teilweise entlang des Stators (1) erstreckt und welches in Umfangsrichtung den Stator (1) zumindest teilweise umfasst, und
- zumindest einen Wickelkopf (7), der jeweils an einer axialen Stirnseite aus dem Stator (1) herausragt,
- zumindest eine Strömungsmaschine (5), welche zwischen der Welle (6) und dem Gehäuse angeordnet ist und welche drehfest mit der Welle (6) verbunden ist,
wobei der zumindest eine Wickelkopf (7) durch ein erstes, mittels der zumindest einen Strömungsmaschine (5) umwälzbares Kühlmedium kühlbar ist
**gekennzeichnet durch**
zumindest eine erste Einlassöffnung (13) und zumindest eine erste Auslassöffnung (14),
wobei zwischen der jeweiligen ersten Einlassöffnung (13) und der jeweiligen ersten Auslassöffnung (14) zumindest ein erster, im Wesentlichen senkrecht zur axialen Richtung verlaufender Kühlkanal (11) vorgesehen ist,
wobei bei einer Relativbewegung des Gondelantriebs in Bezug auf den Gondelantrieb zumindest teilweise umgebendes Wasser das Wasser **durch** die jeweilige erste Einlassöffnung (13), den zumindest einen ersten Kühlkanal (11) und die jeweilige erste Auslassöffnung (14) hindurch strömen kann,
wobei das **durch** den zumindest einen ersten Kühlkanal (11) strömende Wasser **durch** zumindest ein erstes Trennelement (12) vom ersten Kühlmedium getrennt ist.

2. Elektrischer Gondelantrieb nach Anspruch 1,
wobei das erste Kühlmedium Luft ist.

3. Elektrischer Gondelantrieb nach einem der vorhergehenden Ansprüche,
wobei zumindest ein erstes Kühlelement (4) vorgesehen ist, welches in thermischem Kontakt mit dem zumindest einen Gehäuseteil (2) steht und mittels welchem das erste Kühlmedium kühlbar ist.

4. Elektrischer Gondelantrieb nach einem der vorhergehenden Ansprüche,
wobei zumindest ein zweites Kühlelement (19) vorgesehen ist, welches in thermischem Kontakt mit dem zumindest einen ersten Trennelement (12) steht und mittels welchem das erste Kühlmedium kühlbar ist.

5. Elektrischer Gondelantrieb nach einem der vorhergehenden Ansprüche,
wobei die zumindest eine erste Einlassöffnung (13) und/oder die zumindest eine erste Auslassöffnung (14) derart ausgeformt sind, dass bei einer Relativbewegung des Gondelantriebs in Bezug auf das den Gondelantrieb umgebende Wasser eine Strömungsgeschwindigkeit des durch den zumindest einen ersten Kühlkanal (11) strömenden Wassers erhöhbar ist.

6. Elektrischer Gondelantrieb nach einem der vorhergehenden Ansprüche,
wobei der elektrische Gondelantrieb einen Rotor (3) aufweist, der zumindest abschnittsweise hohlzylinderförmig ausgeformt ist,
wobei am einen axialen Ende des Gondelantriebs eine zweite Einlassöffnung (23) und an anderen axialen Ende des Gondelantriebs eine zweite Auslassöffnung (24) vorgesehen sind,
wobei zwischen der zweiten Einlassöffnung (23) und der zweiten Auslassöffnung (24) ein zweiter, im Wesentlichen in axialer Richtung verlaufender Kühlkanal (21) vorgesehen ist, welcher durch den hohlzylinderförmigen Abschnitt des Rotors (3) hindurch führt,
wobei bei einer Relativbewegung des Gondelantriebs in Bezug auf den Gondelantrieb zumindest teilweise umgebendes Wasser das Wasser durch die zweite Einlassöffnung (23), den zweiten Kühlkanal (21) und die zweite Auslassöffnung (24) hindurch strömen kann,
wobei das durch den zweiten Kühlkanal (21) strömende Wasser durch zumindest ein zweites Trennelement (22) vom ersten Kühlmedium getrennt ist.

7. Elektrischer Gondelantrieb nach Anspruch 6,
wobei zumindest ein drittes Kühlelement (20) vorgesehen ist, welches in thermischem Kontakt mit dem zumindest einen zweiten Trennelement (22) steht und mittels welchem das erste Kühlmedium kühlbar ist.

8. Elektrischer Gondelantrieb nach Anspruch 6 oder 7,
wobei der Rotor (3) einen Zwischenraum (25) zwischen einem inneren Hohlzylinder (26), welcher den zweiten Kühlkanal (21) im axialen Bereich des inneren Hohlzylinders (26) nach radial außen begrenzt, und einem äußeren Hohlzylinder (27) aufweist, welcher koaxial zum inneren Hohlzylinder (26) angeordnet ist und welcher einen größeren Durchmesser als der innere Hohlzylinder (26) aufweist,
wobei das erste Kühlmedium durch den Zwischenraum (25) umwälzbar ist.

9. Elektrischer Gondelantrieb nach Anspruch 8,
wobei zumindest eine dritte Einlassöffnung (33) vorgesehen ist, durch welche jeweils das erste Kühlmedium in den Zwischenraum (25) hinein führbar ist,
wobei zumindest eine dritte Auslassöffnung (34) vorgesehen ist, durch welche jeweils das erste Kühlmedium aus dem Zwischenraum (25) heraus führbar ist,
wobei zwischen dem inneren Hohlzylinder (26) und dem äußeren Hohlzylinder (27) zumindest ein drittes Trennelement (32) vorgesehen ist, mittels welchem das durch die zumindest eine dritte Einlassöffnung (33) in den Zwischenraum (25) hinein führbare erste Kühlmedium an der radialen Außenfläche des inneren Hohlzylinders (26) entlang zur axialen Mitte führbar ist und mittels welchem das erste Kühlmedium von der axialen Mitte entlang der radialen Innenfläche des äußeren Hohlzylinders (27) zur zumindest einen dritten Auslassöffnung (34) führbar ist.

10. Elektrischer Gondelantrieb nach Anspruch 6 oder 7,
wobei der Rotor (3) einen Zwischenraum (25) zwischen einem inneren Hohlzylinder (26), welcher den zweiten Kühlkanal (21) im axialen Bereich des inneren Hohlzylinders (26) nach radial außen begrenzt, und einem äußeren Hohlzylinder (27) aufweist, welcher koaxial zum inneren Hohlzylinder (26) angeordnet ist und welcher einen größeren Durchmesser als der innere Hohlzylinder (26) aufweist,
wobei zumindest ein Wärmetauscher (28) fluiddicht mit dem Zwischenraum (25) verbunden ist,
wobei ein zweites Kühlmedium durch den Zwischenraum (25) und den zumindest einen Wärmetauscher (28) umwälzbar ist,
wobei das erste Kühlmedium mittels des zumindest einen Wärmetauschers (28) kühlbar ist.

11. Elektrischer Gondelantrieb nach Anspruch 10,
wobei zumindest eine dritte Einlassöffnung (33) vorgesehen ist, durch welche das zweite Kühlmedium vom Wärmetauscher (28) in den Zwischenraum (25) hinein führbar ist,
wobei zumindest eine dritte Auslassöffnung (34) vorgesehen ist, durch welche das zweite Kühlmedium aus dem Zwischenraum (25) heraus in den Wärmetauscher (28) führbar ist,
wobei ein drittes Trennelement (32) zwischen dem inneren Hohlzylinder (26) und dem äußeren Hohlzylinder (27) vorgesehen ist, mittels welchem das durch die zumindest eine dritte Einlassöffnung (33) in den Zwischenraum (25) hinein führbare zweite Kühlmedium an der radialen Außenfläche des inneren Hohlzylinders (26) entlang zur axialen Mitte führbar ist und mittels welchem das zweite Kühlmedium von der axialen Mitte entlang der radialen Innenfläche des äußeren Hohlzylinders (27) zur zumindest einen dritten Auslassöffnung (34) führbar ist.

12. Elektrischer Gondelantrieb nach einem der Ansprüche 6-11,
wobei im axialen Bereich des Rotors (3) ein koaxial zum hohlzylinderförmigen Abschnitt des Rotors (3) angeordnetes Umlenkelement (29) vorgesehen ist,
wobei der Außendurchmesser des Umlenkelements (29) kleiner als der Innendurchmesser des hohlzylinderförmigen Abschnitts des Rotors (3) ist.

## Claims

1. Electric pod drive for a ship having
- an electric motor with a stator (1) and a shaft (6) arranged coaxially with respect to the stator (1),
- a housing with at least one housing part (2), which, in the axial direction, extends at least partially along the stator (1) and which, in the peripheral direction, at least partially comprises the stator (1), and
- at least one winding head (7), which projects out of the stator (1) on an axial front end in each case,
- at least one turbo-machine (5), which is arranged between the shaft (6) and the housing and which is connected to the shaft (6) in a torque-proof manner,
wherein the at least one winding head (7) can be cooled by a first cooling medium which can be circulated by means of the at least one turbo-machine (5)
**characterised by**
at least one first inlet opening (13) and at least one first outlet opening (14),
wherein provision is made between the respective first inlet opening (13) and the respective first outlet opening (14) for at least one first cooling duct (11) which runs substantially perpendicular to the axial direction,
wherein with a relative movement of the pod drive with respect to water surrounding the pod drive at least partially, the water can flow through the respective first inlet opening (13), the at least one first cooling duct (11) and the respective first outlet opening (14),
wherein the water flowing through the at least one first cooling duct (11) is separated from the first cooling medium by at least one first separator element (12).

2. Electric pod drive according to claim 1,
wherein the first cooling medium is air.

3. Electric pod drive according to one of the preceding claims,
wherein at least one first cooling element (4) is provided, which is in thermal contact with the at least one housing part (2) and by means of which the first cooling medium can be cooled.

4. Electric pod drive according to one of the preceding claims,
wherein at least one second cooling element (19) is provided, which is in thermal contact with the at least one first separator element (12) and by means of which the first cooling medium can be cooled.

5. Electric pod drive according to one of the preceding claims,
wherein the at least one first inlet opening (13) and/or the at least one first outlet opening (14) are moulded such that with a relative movement of the pod drive with respect to the water surrounding the pod drive, a flow rate of the water flowing through the at least one first cooling duct (11) can be increased.

6. Electric pod drive according to one of the preceding claims,
wherein the electric pod drive has a rotor (3), which is moulded to be hollow cylinder-shaped at least in sections, wherein a second inlet opening (23) is provided on an axial end of the pod drive and a second outlet opening (24) is provided on the other axial end of the pod drive,
wherein a second cooling duct (21) which runs substantially in the axial direction is provided between the second inlet opening (23) and the second outlet opening (24), said cooling duct being guided through the hollow cylinder-shaped section of the rotor (3),
wherein with a relative movement of the pod drive with respect to water at least partially surrounding the pod drive, the water can flow through the second inlet opening (23), the second cooling duct (21) and the second outlet opening (24),
wherein the water flowing through the second cooling duct (21) is separated from the first cooling medium by means of at least one second separator element (22).

7. Electric pod drive according to claim 6,
wherein at least one third cooling element (20) is provided, which is in thermal contact with the at least one second separator element (22) and by means of which the first cooling medium can be cooled.

8. Electric pod drive according to claim 6 or 7,
wherein the rotor (3) has a clear spacing (25) between an inner hollow cylinder (26), which delimits the second cooling duct (21) in the axial region of the inner hollow cylinder (26) radially outwards, and an outer hollow cylinder (27), which is arranged coaxially with respect to the inner hollow cylinder (26) and which has a larger diameter than the inner hollow cylinder (26),
wherein the first cooling medium can be circulated through the clear spacing (25).

9. Electric pod drive according to claim 8,
wherein at least one third inlet opening (33) is provided, through which the first cooling medium can be conducted into the clear spacing (25) in each case,
wherein at least one third outlet opening (34) is provided, through which the first cooling medium can be conducted out of the clear spacing (25) in each case,
wherein at least one third separator element (32) is provided between the inner hollow cylinder (26) and the outer hollow cylinder (27), by means of which the first cooling medium which can be conducted through the at least one third inlet opening (33) into the clear spacing (25) can be conducted along the radial outer surface of the inner hollow cylinder (26) to the axial centre and by means of which the first cooling medium can be conducted from the axial centre along the radial inner surface of the outer hollow cylinder (27) to the at least one third outlet opening (34).

10. Electric pod drive according to claim 6 or 7,
wherein the rotor (3) has a clear spacing (25) between an inner hollow cylinder (26), which delimits the second cooling duct (21) in the axial region of the inner hollow cylinder (26) radially outwards, and an outer hollow cylinder (27), which is arranged coaxially with respect to the inner hollow cylinder (26) and which has a larger diameter than the inner hollow cylinder (26),
wherein at least one heat exchanger (28) is connected in a fluid-tight manner to the clear spacing (25),
wherein a second cooling medium can be circulated through the clear spacing (25) and the at least one heat exchanger (28), wherein the first cooling medium can be cooled by means of the at least one heat exchanger (28).

11. Electric pod drive according to claim 10,
wherein at least one third inlet opening (33) is provided, through which the second cooling medium can be conducted from the heat exchanger (28) into the clear spacing (25),
wherein at least one third outlet opening (34) is provided, through which the second cooling medium can be conducted out of the clear spacing (25) into the heat exchanger (28),
wherein a third separator element (32) is provided between the inner hollow cylinder (26) and the outer hollow cylinder (27), by means of which the second cooling medium which can be conducted through the at least one third inlet opening (33) into the clear spacing (25) can be conducted along the radial outer surface of the inner hollow cylinder (26) to the axial centre and by means of which the second cooling medium can be conducted from the axial centre along the radial inner surface of the outer hollow cylinder (27) to the at least one third outlet opening (34).

12. Electric pod drive according to one of claims 6 - 11,
wherein provision is made in the axial region of the rotor (3) for a deflection element (29) arranged coaxially with respect to the hollow cylinder-shaped section of the rotor (3),
wherein the external diameter of the deflection element (29) is smaller than the internal diameter of the hollow cylinder-shaped section of the rotor (3).

## Revendications

1. Système de propulsion électrique monté dans une nacelle pour un bateau, comportant
- un moteur électrique ayant un stator ( 1 ) et un arbre ( 6 ) monté coaxialement au stator ( 1 ),
- une enveloppe ( 2 ) ayant au moins une partie ( 2 ) qui s'étend dans la direction axiale au moins en partie le long du stator ( 1 ) et qui entoure au moins en partie le rotor ( 1 ) dans la direction périphérique et
- au moins une tête ( 7 ) de bobine, qui dépasse du stator ( 1 ) d'un côté frontal axial,
- au moins une turbomachine ( 5 ) qui est disposée entre l'arbre ( 6 ) et l'enveloppe et qui est solidaire en rotation de l'arbre ( 6 )
dans lequel la au moins une tête ( 7) de bobine peut être refroidie par un premier fluide de refroidissement pouvant être mis en circulation au moyen de la au moins une turbomachine ( 5 )
**caractérisé par**
au moins une première ouverture ( 13 ) d'entrée et au moins une première ouverture ( 14 ) de sortie,
dans lequel il est prévu entre la première ouverture ( 13 ) d'entrée et la première ouverture ( 14 ) de sortie au moins un premier conduit ( 11 ) de refroidissement s'étendant sensiblement perpendiculairement à la direction axiale,
dans lequel, lors d'un mouvement relatif du système de propulsion monté dans une nacelle par rapport à de l'eau entourant au moins en partie le système de propulsion monté dans une nacelle, l'eau peut passer dans la première ouverture ( 13 ) d'entrée, le au moins premier conduit ( 11 ) de refroidissement et la première ouverture ( 14 ) de sortie,
dans lequel l'eau passant dans le au moins premier conduit ( 11 ) de refroidissement est séparée du premier fluide de refroidissement par au moins un premier élément ( 12 ) de séparation.

2. Système de propulsion électrique monté dans une nacelle suivant la revendication 1,
dans lequel le premier fluide de refroidissement est de l'air.

3. Système de propulsion électrique monté dans une nacelle suivant l'une des revendications précédentes, dans lequel il est prévu au moins un premier élément ( 4 ) de refroidissement, qui est en contact thermique avec la au moins une partie ( 2 ) d'enveloppe et au moyen duquel le premier fluide de refroidissement peut être refroidi.

4. Système de propulsion électrique monté dans une nacelle suivant l'une des revendications précédentes, dans lequel il est prévu au moins un deuxième élément ( 19 ) de refroidissement, qui est en contact thermique avec le au moins premier élément ( 12 ) de séparation et au moyen duquel le premier fluide de refroidissement peut être refroidi.

5. Système de propulsion électrique monté dans une nacelle suivant l'une des revendications précédentes, dans lequel la au moins une première ouverture ( 13 ) d'entrée et/ou la au moins une première ouverture ( 14 ) de sortie sont conformées de manière à ce que, lors d'un mouvement relatif du système de propulsion monté dans une nacelle par rapport à de l'eau entourant le système de propulsion monté dans une nacelle, une vitesse d'écoulement de l'eau passant dans le au moins premier conduit ( 11 ) de refroidissement peut être augmentée.

6. Système de propulsion électrique monté dans une nacelle suivant l'une des revendications précédentes,
dans lequel le système de propulsion électrique monté dans une nacelle a un rotor ( 3 ) conformé en cylindre creux au moins par tronçon,
dans lequel il est prévu à une extrémité axiale du système de propulsion monté dans une nacelle une deuxième ouverture ( 23 ) d'entrée et à l'autre extrémité axiale du système de propulsion monté dans une nacelle une deuxième ouverture ( 24 ) de sortie,
dans lequel il est prévu, entre la deuxième ouverture ( 23 ) d'entrée et la deuxième ouverture ( 24 ) de sortie, un deuxième conduit ( 21 ) de refroidissement, qui s'étend sensiblement dans la direction axiale et qui passe dans le tronçon en forme de cylindre creux du rotor ( 3 ),
dans lequel lors d'un mouvement relatif du système de propulsion monté dans une nacelle par rapport à de l'eau entourant au moins en partie le système de propulsion monté dans une nacelle, l'eau peut passer dans la deuxième ouverture ( 23 ) d'entrée, le deuxième conduit ( 21 ) de refroidissement et la deuxième ouverture ( 24 ) de sortie,
dans lequel l'eau passant dans le deuxième conduit ( 21 ) de refroidissement est séparée du premier fluide de refroidissement par au moins un deuxième élément ( 22 ) de séparation.

7. Système de propulsion électrique monté dans une nacelle suivant la revendication 6,
dans lequel il est prévu au moins un troisième élément ( 20 ) de refroidissement, qui est en contact thermique avec le au moins deuxième élément ( 22 ) de séparation et au moyen duquel le premier fluide de refroidissement peut être refroidi.

8. Système de propulsion électrique monté dans une nacelle suivant la revendication 6 ou 7, dans lequel le rotor ( 3 ) a un espace ( 25 ) intermédiaire entre un cylindre ( 26 ) intérieur creux, qui délimite vers l'extérieur radialement le deuxième conduit ( 21 ) de refroidissement dans la partie axiale du cylindre ( 26 ) intérieur creux, et un cylindre ( 27 ) extérieur creux, qui est disposé coaxialement au cylindre ( 26 ) intérieur creux et qui a un diamètre plus grand que le cylindre ( 26 ) intérieur creux,
dans lequel le premier fluide de refroidissement peut circuler dans l'espace ( 25 ) intermédiaire.

9. Système de propulsion électrique monté dans une nacelle suivant la revendication 8, dans lequel il est prévu au moins une troisième ouverture ( 33 ) d'entrée, par laquelle le premier fluide de refroidissement peut être envoyé dans l'espace ( 25 ) intermédiaire,
dans lequel il est prévu une troisième ouverture ( 34 ) de sortie, par laquelle le premier fluide de refroidissement peut sortir de l'espace ( 25 ) intermédiaire,
dans lequel il est prévu, entre le cylindre ( 26 ) intérieur creux et le cylindre ( 27 ) extérieur creux, au moins un troisième élément ( 32 ) de séparation, au moyen duquel le premier fluide de refroidissement, pouvant entrer dans l'espace ( 25 ) intermédiaire en passant par la au moins une troisième ouverture ( 33 ) d'entrée, peut être conduit au milieu axial le long de la surface radiale extérieure du cylindre ( 26 ) intérieur creux et au moyen duquel le premier fluide de refroidissement peut être conduit du milieu axial le long de la surface intérieur radiale du cylindre ( 27 ) extérieur creux à au moins une troisième ouverture ( 34 ) de sortie.

10. Système de propulsion électrique monté dans une nacelle suivant l'une des revendications 6 ou 7, dans lequel le rotor ( 3 ) a un espace ( 25 ) intermédiaire entre un cylindre ( 26 ) intérieur creux, qui délimite à l'extérieur radialement le deuxième conduit ( 21 ) de refroidissement dans la région axiale du cylindre ( 26 ) intérieur creux et un cylindre ( 27 ) extérieur creux, qui est disposé coaxialement au cylindre ( 26 ) intérieur creux et qui a un diamètre plus grand que le cylindre ( 26 ) intérieur creux,
dans lequel au moins un échangeur de chaleur ( 28 ) communique d'une manière étanche au fluide avec l'espace ( 25 ) intermédiaire,
dans lequel un deuxième fluide de refroidissement peut être mis en circulation dans l'espace ( 25 ) intermédiaire et le au moins un échangeur de chaleur ( 28 ),
le premier fluide de refroidissement pouvant être refroidi au moyen du au moins un échangeur de chaleur ( 28 ).

11. Système de propulsion électrique monté dans une nacelle suivant la revendication 10,
dans lequel il est prévu au moins une troisième ouverture ( 33 ) d'entrée, par laquelle le deuxième fluide de refroidissement peut être envoyé de l'échangeur de chaleur ( 28 ) dans l'espace ( 25 ) intermédiaire,
dans lequel il est prévu au moins une troisième ouverture ( 34 ) de sortie, par laquelle le deuxième fluide de refroidissement peut être envoyé de l'espace ( 25 ) intermédiaire à l'échangeur de chaleur ( 28 ),
dans lequel il est prévu un troisième élément ( 32 ) de séparation entre le cylindre ( 26 ) intérieur creux et le cylindre ( 27 ) extérieur creux, au moyen duquel le deuxième fluide de refroidissement, pouvant être envoyé par la au moins une troisième ouverture ( 33 ) d'entrée dans l'espace ( 25 ) intermédiaire, peut être envoyé au milieu axial le long de la surface extérieur radiale du cylindre ( 26 ) extérieur creux et au moyen duquel le deuxième fluide de refroidissement peut être envoyé du milieu axial le long de la surface intérieure radiale du cylindre ( 27 ) extérieur creux à au moins une troisième ouverture ( 34 ) de sortie.

12. Système de propulsion électrique monté dans une nacelle suivant l'une des revendications 6 à 11, dans lequel, dans la région du rotor ( 3 ) est prévu un élément ( 29 ) de déviation coaxialement au tronçon en forme de cylindre creux du rotor ( 1),
le diamètre extérieur de l'élément ( 29 ) de déviation étant plus petit que le diamètre intérieur du tronçon en forme de cylindre creux du rotor ( 3 ).
